# EUROPÄISCHE PATENTANMELDUNG

(11) **EP 2 065 659 A2**
(43) Veröffentlichungstag der Anmeldung: **03.06.2009**
(21) Anmeldenummer: 08019668.6
(22) Anmeldetag: 11.11.2008
(51) Int. Cl.: F24J 2/42, F24J 2/46, F28D 20/00

(54) **Solarthermische Anlage**

(30) Priorität: 29.11.2007 DE 102007057564
(71) Anmelder: Robert Bosch GmbH, 70442 Stuttgart (DE)
(72) Erfinder: Bödeker, Hendrik, Dr., 71229 Leonberg/Hoefingen (DE); Zucchini, Marco, 70839 Gerlingen (DE)

(57) **Zusammenfassung**

Die Erfindung betrifft eine solarthermische Anlage mit einem Solarfluid, das in einem Kreislauf über mindestens einen Solarkollektor (1), einen Speicherbehälter (2) sowie Vorlauf- und Rücklaufleitungen (3, 4) zur fluidischen Verbindung von Solarkollektor (1) und Speicherbehälter (2) mit Hilfe einer Umwälzpumpe (5) umgewälzt wird.

Die Aufgabe der vorliegenden Erfindung ist es, eine solarthermische Anlage zu schaffen, die die Kostenvorteile von Kunststoff gegenüber Kupfer nutzt, andererseits aber die aus der Stagnation resultierenden Belastungen minimiert. Weiterhin besteht die Aufgabe, ein Verfahren zum Betreiben einer erfindungsgemäßen solarthermischen Anlage zu schaffen. Der erfindungsgemäße Aufbau der solarthermischen Anlage ist gekennzeichnet durch einen Solarkollektor (1), der mindestens einen Solarfluid-führenden Kanal aufweist, dessen sonnenzugewandte Kanalwandung transparent ist, und durch ein Solarfluid aus zwei Solarfluidkomponenten mit unterschiedlichen physikalischen Eigenschaften, die reversibel miteinander vermischbar sind. Die zwei Solarfluidkomponenten unterscheiden sich insbesondere hinsichtlich ihres Absorptionsvermögens, ihres Reflexionsvermögens und/oder ihrer Dichte und haben die Eigenschaft, sich bei niedriger Strömungsgeschwindigkeit und unter Schwerkrafteinwirkung in wenigen Minuten voneinander zu trennen.

Das erfindungsgemäße Verfahren zum Betreiben einer wie vorstehend dargestellten solarthermischen Anlage ist dadurch gekennzeichnet, dass einfallende Sonnenstrahlung (14) durch eine sonnenzugewandte transparente Wandung eines Solarfluid-führenden Kollektorkanals hindurchtritt und in Abhängigkeit von der physikalischen Beschaffenheit des Solarfluids mehr oder weniger vom Solarfluid absorbiert wird.

## Beschreibung

Die Erfindung betrifft eine solarthermische Anlage nach dem Oberbegriff des Patentanspruches 1 mit einem Solarfluid, das in einem Kreislauf über mindestens einen Solarkollektor, einen Speicherbehälter sowie Vorlauf- und Rücklaufleitungen zur fluidischen Verbindung von Solarkollektor und Speicherbehälter mit Hilfe einer Umwälzpumpe umgewälzt wird.

Solarthermische Anlagen haben die Aufgabe, die Strahlungsenergie des Sonnenlichts in Form von Wärme für die Zwecke der Gebäudeheizung und Trinkwarmwasserbereitung verfügbar zu machen. Hierzu wird das Sonnenlicht in einem Solarkollektor aufgefangen und in einem im Kollektor befindlichen Absorber in nutzbare Wärme umgewandelt. In der Regel bestehen die Absorber aus beschichtetem Kupferblech mit aufgeschweißten dünnen Kanälen, in denen ein von einer Umwälzpumpe gefördertes Solarfluid zirkuliert. Als Solarfluid dient in der Regel Wasser mit einem Zusatz an Frostschutzmittel, um ein Einfrieren im Winter zu vermeiden. Die Wärme geht vom Absorber auf das Solarfluid über und wird mit diesem durch eine Vorlaufleitung in einen Speicherbehälter geleitet, wo es das Speichermedium erwärmt. Mit dem Speichermedium wird die Gebäudeheizung oder die Trinkwarmwasserbereitung bedient. Durch eine Rücklaufleitung fließt das abgekühlte Solarfluid im Kreislauf zurück zum Solarkollektor.

Wird dem Speicherbehälter bei Sonneneinstrahlung und Betrieb der solarthermischen Anlage keine Wärme entnommen, weil zum Beispiel kein Heizbedarf besteht, so steigt die Temperatur des Speichermediums immer weiter an. Um eine Überhitzung des Speichermediums zu vermeiden, wird bei Erreichen eines oberen Temperaturgrenzwertes die Anlage automatisch außer Betrieb genommen, d.h. die Umwälzpumpe wird abgeschaltet, womit die Wärmeableitung vom Solarkollektor in den Speicherbehälter zum Erliegen kommt. In der Folge steigen die Temperaturen des Absorbers und des Solarfluides im Absorber an und können Temperaturen von über 200 °C erreichen. Die hohen Temperaturen lassen das Solarfluid über die Jahre altern, weshalb es regelmäßig kontrolliert und gegebenenfalls erneuert werden muss. Die stoffliche und geometrische Stabilität des Kupferabsorbers ist dagegen dauerhaft gegeben und stellt keine ernsthafte Beschränkung dar. Dieser Anlagenzustand heißt Stagnation. Dabei verdampft das im Absorber befindliche Solarfluid. Die Dampfblase drückt die Solarfluid-Flüssigkeitssäule in ein Ausdehnungsgefäß. Erst bei sinkender Temperatur im Solarkollektor fällt die Dampfblase wieder in sich zusammen und das Solarfluid kann in den Absorber zurückfließen.

In einem herkömmlichen Flachkollektor sind mehrere Kilogramm Kupfer verbaut. Kupfer ist ein wertvoller aber auch schwerer Werkstoff, der den Kollektor teuer und schwer handhabbar macht. Dies war spätestens seit den 1980er Jahren Anlass, Alternativkonzepte für den Kupferabsorber zu verfolgen. So genannte Schwimmbadabsorber bestehen aus dunkel eingefärbten Schläuchen, die Solarstrahlung absorbieren und an das in den Schläuchen zirkulierende Solarfluid weiterleiten. Sie sind im Stagnationsfall nur wenig gefährdet, da sie nur niedrige Temperaturen erreichen.

Die Patentschrift US 4 239 035 A offenbart einen Solarkollektor, bei dem die Solarstrahlung in einem dunkel eingefärbten Solarfluid absorbiert wird, das durch eine Kanalplatte aus einem transparenten Kunststoff wie zum Beispiel Polycarbonat fließt. Um der Sonne eine möglichst große Absorberfläche gegenüberzustellen, liegen die parallel durchströmten Kollektorkanäle dicht nebeneinander, getrennt nur durch dünne Zwischenstege. Als Farbstoff im Solarfluid werden Russpartikel eingesetzt, deren Agglomeration miteinander oder an den fluidberührten Wänden mit Hilfe von Benetzungsmitteln verhindert wird.

Kunststoffe weisen gegenüber Kupfer deutlich geringere obere Temperatur- und Druckgrenzwerte auf, deren Unterschreitung für die stoffliche und geometrische Stabilität des Kollektors wichtig ist. In gleicher Weise wie bei den herkömmlichen Absorbern stellt der Stagnationsfall für das Solarfluid eine extreme Belastung dar, weil das in der Kanalplatte stehende Solarfluid wegen der einheitlichen Farbstoffkonzentration sich zunehmend erwärmt. Dem kann beispielsweise mit Drain-Back-Verfahren begegnet werden. Dabei wird bei Erreichen des Temperaturgrenzwertes das Solarfluid aus dem Kollektor zurückgezogen und in einem Vorratsbehälter vor Überhitzung oder Gefrieren geschützt.

Die Aufgabe der vorliegenden Erfindung ist es, eine solarthermische Anlage zu schaffen, die die Kostenvorteile von Kunststoff gegenüber Kupfer nutzt, andererseits aber die aus der Stagnation resultierenden Belastungen minimiert. Weiterhin besteht die Aufgabe, ein Verfahren zum Betreiben einer erfindungsgemäßen solarthermischen Anlage zu schaffen.

Erfindungsgemäß wird dies mit den Merkmalen der Patentansprüche 1 und 19 gelöst. Vorteilhafte Weiterbildungen sind den Unteransprüchen zu entnehmen.

Der erfindungsgemäße Aufbau der solarthermischen Anlage ist gekennzeichnet durch einen Solarkollektor, der mindestens einen Solarfluid-führenden Kanal aufweist, dessen sonnenzugewandte Kanalwandung transparent ist, und durch ein Solarfluid aus zwei Solarfluidkomponenten mit unterschiedlichen physikalischen Eigenschaften, die reversibel miteinander vermischbar sind. Die zwei Solarfluidkomponenten unterscheiden sich insbesondere hinsichtlich ihres Absorptionsvermögens, ihres Reflexionsvermögens und/oder ihrer Dichte und haben die Eigenschaft, sich bei niedriger Strömungsgeschwindigkeit und unter Schwerkrafteinwirkung in wenigen Minuten voneinander zu trennen.

In einer Ausführungsform des Solarfluids liegen beide Solarfluidkomponenten im Betriebstemperaturspektrum flüssig vor. In einer anderen Ausführungsform besteht eine der beiden Solarfluidkomponenten im Betriebstemperaturspektrum aus festen Partikeln, wie zum Beispiel feinkörniges Granulat oder feine Plättchen. Diese können leichter oder schwerer als die andere, flüssige Solarfluidkomponente sein und haben die Eigenschaft, nicht miteinander oder an den Wänden der fluidbenetzten Hydraulikkomponenten zu agglomerieren, womit gewährleistet ist, dass sie stets förderbar sind.

Das Verhältnis zwischen den Abmessungen des Speicherbehälters wie Höhe und Durchmesser und der Förderleistung der Umwälzpumpe ist in einer geeigneten Ausführung so gewählt, dass dem Solarfluid im Speicherbehälter eine zur Trennung seiner Solarfluidkomponenten erforderliche niedrige Strömungsgeschwindigkeit aufgeprägt wird. Je größer der Durchmesser ist, desto geringer wird die Strömungsgeschwindigkeit und desto günstiger sind die Bedingungen zur Trennung des Solarfluides unter Einwirkung der Schwerkraft.

Der Speicherbehälter weist mehrere Anschlüsse auf. Etwa auf halber Behälterhöhe liegt der Vorlaufleitungsanschluss für das vom Solarkollektor kommende, aus der Vorlaufleitung einströmende Solarfluid. Ferner ist mindestens ein Rücklaufleitungsanschluss für das zum Solarkollektor in die Rücklaufleitung ausströmende Solarfluid vorhanden.

In der Rücklaufleitung ist eine aktive oder passive, interne oder externe Mischeinrichtung vorgesehen, mit deren Hilfe das zum Solarkollektor strömende Solarfluid aus den beiden Solarfluidkomponenten gemischt wird. Der Mischeinrichtung können verschiedene Mischeinstellungen vorgegeben werden.

In einer besonders geeigneten Ausführungsform weist der Speicherbehälter zwei Rücklaufleitungsanschlüsse auf, wobei der erste Rücklaufleitungsanschluss im oberen Bereich und der zweite Rücklaufleitungsanschluss im unteren Bereich des Speicherbehälters angeordnet ist. An jeden der beiden Rücklaufleitungsanschlüsse schließt sich ein Rücklaufleitungsabschnitt an. Diese werden strömungsabwärts zusammengeführt und münden in die gemeinsame Rücklaufleitung. An der Stelle ihrer Zusammenführung liegt eine aus einem Dreiwegemischer bestehende passive externe Mischeinrichtung. Durch die Stellung des Dreiwegemischers wird der Rücklaufleitung wahlweise Solarfluid der Solarfluidkomponente aus dem oberen Bereich des Speicherbehälters oder der Solarfluidkomponente aus dem unteren Bereich oder ein aus den beiden Komponenten gemischtes Solarfluid zugeführt.

In einer anderen Ausführungsform verfügt der Speicherbehälter nur über einen etwa auf halber Behälterhöhe liegenden Rücklaufleitungsanschluss. Im Speicherbehälter befindet sich eine aktive Mischeinrichtung, die aus mindestens einem Fluidförderer besteht, der dem Rücklaufleitungsanschluss wahlweise Solarfluid der Solarfluidkomponente aus dem oberen Bereich des Speicherbehälters oder der Solarfluidkomponente aus dem unteren Bereich oder ein aus den beiden Komponenten gemischtes Solarfluid zuführt. Der Fluidförderer nutzt zum Beispiel die Prinzipien der Kreiselpumpe oder der Strahlpumpe.

Bei dieser letztgenannten Ausführungsform weist der Speicherbehälter günstigerweise eine innenliegende Trennwand auf, die den Speicherbehälter in zwei Kammern teilt. Eine erste Kammer dient dem Einströmen des Solarfluids aus der Vorlaufleitung in den Speicherbehälter und der Trennung in seine Komponenten. Eine zweite Kammer dient der Zuführung der Solarfluidkomponenten zum Ausströmen aus dem Speicherbehälter in die Rücklaufleitung. Beide Kammern stehen im oberen und unteren Bereich des Speicherbehälters hydraulisch miteinander in Verbindung.

Zur Übertragung der Wärme des Solarfluids im Speicherbehälter auf Heizungswasser oder Trinkwasser ist im oder am Speicherbehälter ein Wärmetauscher zur Kühlung des Solarfluids angeordnet.

Bei einer weiteren Ausführungsform ist in der Vorlauf- oder Rücklaufleitung ein Reservoir angeordnet, in das bei Stillstand der Umwälzpumpe und unter Schwerkrafteinwirkung die Solarfluidkomponente mit dem höheren Absorptionsvermögen selbsttätig eintritt, während die Solarfluidkomponente mit dem geringeren Absorptionsvermögen im Solarkollektor verbleibt. Damit wird erreicht, dass bei Stagnation keine oder nur noch wenig Strahlungsenergie absorbiert wird und die Temperaturen von Solarfluid und Kollektor einen oberen Temperaturgrenzwert nicht überschreiten. Unterstützt wird dies durch eine Ausführung, bei der die sonnenzugewandte Seite der in Strahlungsrichtung hintenliegenden Kanalwandung des mindestens einen Solarfluid-führenden Kollektorkanals einfallende Sonnenstrahlung reflektiert, oder bei der der mindestens eine Solarfluid-führende Kollektorkanal und seine Kanalwandungen durchgängig transparent sind. So wird das Sonnenlicht entweder zurückgeworfen oder durchläuft den Kollektor ohne Energieaustausch mit dem Solarfluid und/oder dem Solarkollektor.

Der mindestens eine Solarfluid-führende Kollektorkanal kann die Form eines in etwa die ganze Breite des Kollektors einnehmenden Spaltes von geringer Höhe aufweisen und flächig durchströmt werden. Alternativ kann der Solarkollektor eine Vielzahl parallel durchströmter, Solarfluid-führender Kanäle aufweisen, die durch dünnwandige Stege voneinander getrennt sind. In beiden Fällen steht der einfallenden Sonnenstrahlung eine große Absorberfläche gegenüber, die die zur Verfügung stehende Kollektorfläche weitestgehend ausnutzt.

Das erfindungsgemäße Verfahren zum Betreiben einer wie vorstehend dargestellten solarthermischen Anlage ist dadurch gekennzeichnet, dass einfallende Sonnenstrahlung durch eine sonnenzugewandte transparente Wandung eines Solarfluid-führenden Kollektorkanals hindurchtritt und in Abhängigkeit von der physikalischen Beschaffenheit des Solarfluids mehr oder weniger vom Solarfluid absorbiert wird. Das Solarfluid besteht aus zwei reversibel miteinander vermischbaren Solarfluidkomponenten, wobei die Absorption der Sonnenstrahlung auf dem hohen Absorptionsvermögen einer Solarfluidkomponente basiert. Die zwei Solarfluidkomponenten stellen jeweils Anteile zwischen 0 % und 100 % an der insgesamt umgewälzten Solarfluid-Menge. Sie werden aus ihren jeweiligen Sammelbereichen des Speicherbehälters mit Hilfe der Umwälzpumpe abgesaugt, strömen aus dem Speicherbehälter aus und werden zu einem Solarfluid vermischt. Dabei können sie je nach Art der Solarfluidkomponenten beispielsweise disperse Systeme in Form von Emulsionen oder Suspensionen bilden. Die Anteile der Solarfluidkomponenten an dem zum Kollektor geförderten Solarfluid werden über eine Mischeinstellung einer aktiven oder passiven, innerhalb oder außerhalb des Speicherbehälters angeordneten Mischeinrichtung einstellt. Das Solarfluid fließt durch die Rücklaufleitung zum Solarkollektor, wo es sich durch Absorption der Strahlungsenergie des einfallenden Sonnenlichts erwärmt: Zunächst erwärmt sich die Solarfluidkomponente mit dem hohen Absorptionsvermögen, woraufhin es gegenüber der zweiten Komponente zu einem Temperaturausgleich durch Wärmeleitung kommt. Anschließend wird das Solarfluid durch die Vorlaufleitung zurück zum Speicherbehälter gefördert, strömt in den Speicherbehälter ein und überträgt hier seine Wärme auf einen Wärmetauscher. Das in den Speicherbehälter einströmende Solarfluid wird wegen des relativ großen Behälterdurchmessers in seiner Strömungsgeschwindigkeit verzögert und trennt sich unter Einwirkung der Schwerkraft wieder in seine Solarfluidkomponenten.

Diese sammeln sich daraufhin je nach Dichte in unterschiedlichen Höhenbereichen (im oberen oder im unteren Sammelbereich) des Speicherbehälters. Die Solarfluidkomponenten sind auch im Fall einer festen partikelförmigen Konsistenz so beschaffen, dass sie nicht miteinander oder an benetzten Wänden agglomerieren, sondern stets förderbar bleiben. Die Trennung des Solarfluids in seine Einzelkomponenten kann durch Strömungsschikanen, Filter oder ähnliches begünstigt werden.

Bei Normalbetrieb, das heißt bei gewünschter Sonnenstrahlungsabsorption im Solarkollektor und gewünschter Erwärmung des Solarfluides im Speicherbehälter, saugt die Umwälzpumpe bei entsprechender Einstellung der Mischeinrichtung wahlweise die Solarfluidkomponente mit hohem Absorptionsvermögen aus ihrem Sammelbereich im Speicherbehälter oder ein Gemisch beider Komponenten aus dem oberen und unteren Sammelbereich an und fördert diese Komponente oder dieses Gemisch in den Kollektor.

Oberhalb eines vorgebbaren Temperaturgrenzwertes für eine unzulässige Erwärmung des Solarfluides im Solarkollektor und/oder im Speicherbehälter saugt die Umwälzpumpe bei entsprechender Einstellung der Mischeinrichtung wahlweise eine Solarfluidkomponente, die geringes Absorptionsvermögen oder hohes Reflexionsvermögen aufweist, aus ihrem Sammelbereich im Speicherbehälter, oder ein Gemisch dieser Komponente mit der hoch absorbierenden Komponente aus ihren jeweiligen Sammelbereichen an und fördert diese Komponente oder dieses Gemisch in den Kollektor.

Fällt die Umwälzpumpe bei einem vorgebbaren Temperaturgrenzwert für eine unzulässige Erwärmung des Solarfluides im Solarkollektor und/oder im Speicherbehälter aus, so trennt sich das im Solarkollektor stehende Solarfluid wegen seiner niedrigen Strömungsgeschwindigkeit und unter Schwerkrafteinwirkung in seine beiden Komponenten. Die Solarfluidkomponente mit hohem Absorptionsvermögen strömt selbsttätig aus dem Solarkollektor aus und sammelt sich im Speicherbehälter und/oder in einem weiteren, eigens hierfür vorgesehenen Reservoir. Bei einem alternativen Verfahrensschritt steigt die im Speicherbehälter befindliche Solarfluidkomponente mit hohem Reflexionsvermögen selbsttätig durch die Rücklaufleitung in den Solarkollektor auf, wobei die Solarfluidkomponente mit hohem Absorptionsvermögen aus dem Solarkollektor verdrängt wird und sich im Speicherbehälter und/oder in einem Reservoir sammelt.

Mit dieser Erfindung werden eine solarthermische Anlage und ein Verfahren zu ihrem Betreiben geschaffen, die den Ersatz des teuren Kupfers durch kostengünstigen Kunststoff erlauben. Die extremen Temperaturbelastungen des Solarfluids und des Solarkollektors (mit allen weiteren angeschlossenen Anlagenkomponenten), wie sie bei Stagnation der Anlage auftreten können, werden zuverlässig vermieden. Es kommt zu keiner Bildung von Dampfblasen im überhitzten Solarkollektor, die Druckbelastungen liegen dementsprechend vergleichsweise niedrig. Die Stilllegung der Anlage bei länger ausbleibendem Wärmeverbrauch ist wie auch ein erneutes Anfahren der Anlage nach Stagnation völlig problemlos, indem die physikalische Beschaffenheit des Solarfluides kontinuierlich in kleiner oder großer Schrittweite variiert und dadurch die Wärmeabfuhr aus dem Solarkollektor dem aktuellen Bedarf angepasst werden kann. Ein weiterer Vorteil besteht darin, dass in dem einzigen vorhandenen Speicherbehälter das Mischen und Entmischen des Solarfluides stattfindet, und keine zusätzlichen Komponenten, Rohrgruppen und Ventile erforderlich sind.

Die Zeichnung stellt schematisch in drei Figuren geeignete Ausführungen der erfindungsgemäßen solarthermischen Anlage dar.

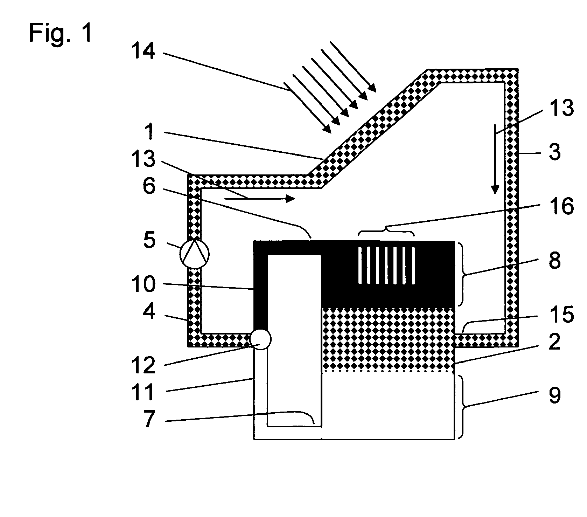

Figur 1 zeigt eine Ausführung der erfindungsgemäßen solarthermischen Anlage mit einem Solarfluid, das in einem Kreislauf über einen Solarkollektor 1, einen Speicherbehälter 2 sowie Vorlauf- und Rücklaufleitungen 3, 4 zur fluidischen Verbindung von Solarkollektor 1 und Speicherbehälter 2 mit Hilfe einer Umwälzpumpe 5 umgewälzt wird. Über Rücklaufleitungsanschlüsse 6, 7 am oberen und unteren Sammelbereich 8, 9 des Speicherbehälters 2 und Rücklaufleitungsabschnitte 10, 11 werden die verschiedenen Solarfluidkomponenten (hier farblich schwarz oder weiß dargestellt) angesaugt. Im Dreiwegemischer 12 mischen sich die beiden Solarfluidkomponenten zu einem Solarfluid (hier schwarz/weiß-schraffiert), das von der Umwälzpumpe 5 in den Solarkollektor 1 gefördert wird (Strömungsrichtung 13). Die hoch absorbierende Solarfluidkomponente absorbiert die Solarstrahlung 14, erwärmt sich und leitet im Temperaturausgleich Wärme an die zweite Solarfluidkomponente. Anschließend strömt das Solarfluid über die Vorlaufleitung 3 und den Vorlaufleitungsanschluss 15 auf etwa halber Behälterhöhe in den Speicherbehälter 2 zurück. Hier verlangsamt sich das Solarfluid und trennt sich unter Einwirkung der Schwerkraft wieder in seine beiden Solarfluidkomponenten. Diese sammeln sich aufgrund unterschiedlicher Dichte in verschiedenen Höhen (Sammelbereiche 8, 9) im Speicherbehälter 2. Im Speicherbehälter 2 ist ein Wärmetauscher 16 angeordnet, der mit dem solar erwärmten Solarfluid Heizungswasser oder Trinkwasser erwärmt.

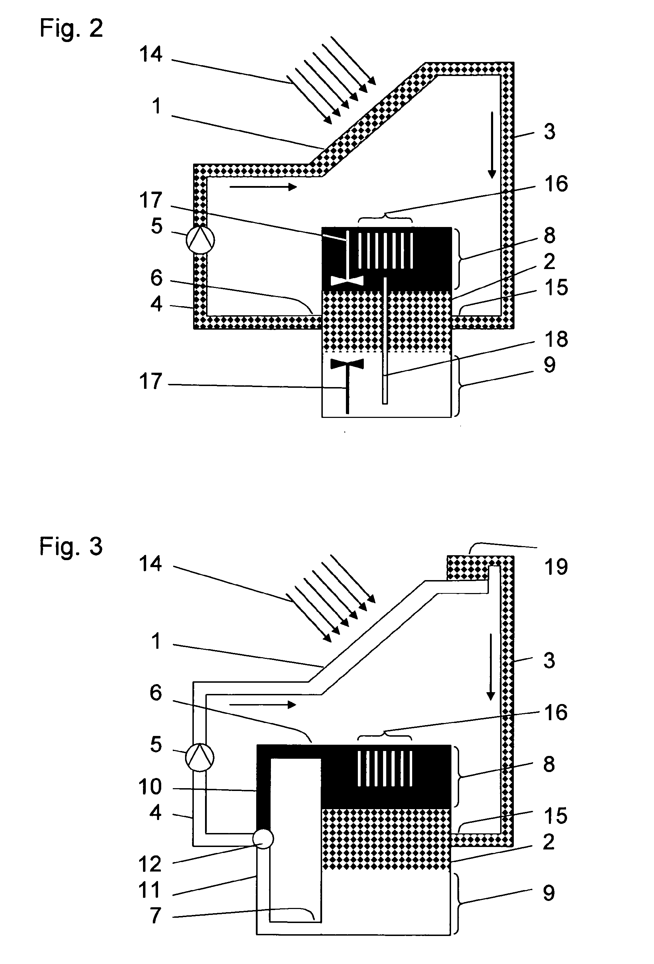

Figur 2 zeigt eine andere Ausführung der Solarfluidmischung aus den beiden Solarfluidkomponenten. Dem Rücklaufleitungsanschluss 6 auf halber Speicherbehälterhöhe wird durch die Fluidförderer 17 wahlweise die Solarfluidkomponente aus dem oberen oder dem unteren Sammelbereich 8, 9 des Speicherbehälters 2 oder ein Gemisch beider Komponenten zugeführt. Eine Trennwand 18 teilt den Speicherbehälter 2 in zwei Kammern, von denen eine dem Einströmen des Solarfluides in den Speicherbehälter 2 und dem Trennen in seine Komponenten dient, und die andere der Zuführung der gewünschten Komponente oder des gewünschten Komponentengemischs zum Rücklaufleitungsanschluss 6.

Figur 3 zeigt eine gegenüber Figur 1 abgeänderte Ausführung mit einem Reservoir 19 in der Vorlaufleitung 3. Dargestellt ist ein Anlagenzustand im Stagnationsfall oder auch bei Ausfall der Umwälzpumpe 5. Die hoch absorbierende Solarfluidkomponente (hier schwarz) ist unter Einwirkung der Förderleistung der Umwälzpumpe 5 oder unter Einwirkung der Schwerkraft aus dem Solarkollektor 1 heraus und in das Reservoir 19 eingeströmt. Im Solarkollektor 1 ist nur die nicht absorbierende oder die reflektierende Solarfluidkomponente zurückgeblieben.

## Patentansprüche

1. Solarthermische Anlage mit einem Solarfluid, das in einem Kreislauf über mindestens einen Solarkollektor (1), einen Speicherbehälter (2) sowie Vorlauf- und Rücklaufleitungen (3, 4) zur fluidischen Verbindung von Solarkollektor (1) und Speicherbehälter (2) mit Hilfe einer Umwälzpumpe (5) umgewälzt wird,
**dadurch gekennzeichnet, dass** der Solarkollektor (1) mindestens einen Solarfluid-führenden Kanal aufweist, dessen sonnenzugewandte Kanalwandung transparent ist, und dass das Solarfluid aus zwei reversibel miteinander vermischbaren Solarfluidkomponenten mit unterschiedlichen physikalischen Eigenschaften besteht, die sich insbesondere hinsichtlich ihres Absorptionsvermögens, ihres Reflexionsvermögens und/oder ihrer Dichte unterscheiden.

2. Solarthermische Anlage nach Anspruch 1,
**dadurch gekennzeichnet, dass** die Solarfluidkomponenten sich bei niedriger Strömungsgeschwindigkeit und unter Schwerkrafteinwirkung voneinander trennen.

3. Solarthermische Anlage nach Anspruch 1 oder 2,
**dadurch gekennzeichnet, dass** eine Solarfluidkomponente im Betriebstemperaturspektrum in Form fester Partikel, wie feinkörniges Granulat oder feine Plättchen, vorliegt.

4. Solarthermische Anlage nach einem der Ansprüche 1 bis 3,
**dadurch gekennzeichnet, dass** das Verhältnis zwischen den Abmessungen des Speicherbehälters (2) und der Förderleistung der Umwälzpumpe (5) derart ist, dass dem Solarfluid im Speicherbehälter (2) eine zur Trennung seiner Solarfluidkomponenten erforderliche niedrige Strömungsgeschwindigkeit aufgeprägt wird.

5. Solarthermische Anlage nach einem der Ansprüche 1 bis 4,
**dadurch gekennzeichnet, dass** der Speicherbehälter (2) einen etwa auf halber Behälterhöhe liegenden Vorlaufleitungsanschluss (15) für das vom Solarkollektor (1) kommende, aus der Vorlaufleitung (3) einströmende Solarfluid und mindestens einen Rücklaufleitungsanschluss (6, 7) für das zum Solarkollektor (1) in die Rücklaufleitung (4) ausströmende Solarfluid aufweist.

6. Solarthermische Anlage nach einem der Ansprüche 1 bis 5,
**dadurch gekennzeichnet, dass** der Speicherbehälter (2) rücklaufseitig eine aktive oder passive, interne oder externe Mischeinrichtung (12, 17) mit vorgebbarer Mischeinstellung aufweist, mit deren Hilfe das zum Solarkollektor (1) strömende Solarfluid aus den beiden Solarfluidkomponenten gemischt wird.

7. Solarthermische Anlage nach einem der Ansprüche 1 bis 6,
**dadurch gekennzeichnet, dass** der Speicherbehälter (2) zwei Rücklaufleitungsanschlüsse (6, 7) aufweist, wobei der erste Rücklaufleitungsanschluss (6) im oberen Bereich (8) und der zweite Rücklaufleitungsanschluss (7) im unteren Bereich (9) des Speicherbehälters (2) angeordnet ist, und dass sich an jeden der beiden Rücklaufleitungsanschlüsse (6, 7) ein Rücklaufleitungsabschnitt (10, 11) anschließt, wobei die Rücklaufleitungsabschnitte (10, 11) strömungsabwärts zusammengeführt werden und in die gemeinsame Rücklaufleitung (4) münden.

8. Solarthermische Anlage nach einem der Ansprüche 1 bis 7,
**dadurch gekennzeichnet, dass** die passive externe Mischeinrichtung aus einem Dreiwegemischer (12) besteht, in dem die beiden Rücklaufleitungsabschnitte (10, 11) zusammengeführt werden und der der Rücklaufleitung (4) wahlweise Solarfluid der Solarfluidkomponente aus dem oberen Bereich (8) des Speicherbehälters (2) oder der Solarfluidkomponente aus dem unteren Bereich (9) oder ein aus den beiden Komponenten gemischtes Solarfluid zuführbar macht.

9. Solarthermische Anlage nach einem der Ansprüche 1 bis 6,
**dadurch gekennzeichnet, dass** der Speicherbehälter (2) einen etwa auf halber Behälterhöhe liegenden Rücklaufleitungsanschluss (6) aufweist, und dass die aktive, interne Mischeinrichtung aus mindestens einem Fluidförderer (17) besteht, der dem Rücklaufleitungsanschluss (6) wahlweise Solarfluid der Solarfluidkomponente aus dem oberen Bereich (8) des Speicherbehälters oder der Solarfluidkomponente aus dem unteren Bereich (9) oder ein aus den beiden Komponenten gemischtes Solarfluid zuführt.

10. Solarthermische Anlage nach einem der Ansprüche 1 bis 9,
**dadurch gekennzeichnet, dass** der Speicherbehälter (2) eine innenliegende Trennwand (18) aufweist, die den Speicherbehälter (2) in zwei Kammern teilt, wobei eine erste Kammer dem Einströmen des Solarfluids aus der Vorlaufleitung (3) in den Speicherbehälter (2) und der Trennung in seine Komponenten dient, und wobei eine zweite Kammer der Zuführung der Solarfluidkomponenten zum Ausströmen aus dem Speicherbehälter (2) in die Rücklaufleitung (4) dient, und dass die beiden Kammern im oberen und unteren Bereich (8, 9) des Speicherbehälters (2) hydraulisch miteinander in Verbindung stehen.

11. Solarthermische Anlage nach einem der Ansprüche 1 bis 10,
**dadurch gekennzeichnet, dass** am Speicherbehälter (2) ein Wärmetauscher (16) zur Kühlung des Solarfluids angeordnet ist.

12. Solarthermische Anlage nach einem der Ansprüche 1 bis 11,
**dadurch gekennzeichnet, dass** in der Vorlauf- oder Rücklaufleitung (3, 4) ein Reservoir (19) angeordnet ist, in das bei Stillstand der Umwälzpumpe (5) und unter Schwerkrafteinwirkung die Solarfluidkomponente mit dem höheren Absorptionsvermögen eintritt, während die Solarfluidkomponente mit dem geringeren Absorptionsvermögen im Solarkollektor (1) verbleibt.

13. Solarthermische Anlage nach einem der Ansprüche 1 bis 12,
**dadurch gekennzeichnet, dass** die sonnenzugewandte Seite der in Strahlungsrichtung hintenliegenden Kanalwandung des mindestens einen Solarfluid-führenden Kollektorkanals einfallende Sonnenstrahlung (14) reflektiert.

14. Solarthermische Anlage nach einem der Ansprüche 1 bis 13,
**dadurch gekennzeichnet, dass** der mindestens eine Solarfluid-führende Kollektorkanal und seine Kanalwandungen durchgängig transparent sind.

15. Solarthermische Anlage nach einem der Ansprüche 1 bis 14,
**dadurch gekennzeichnet, dass** der mindestens eine Solarfluid-führende Kollektorkanal die Form eines in etwa die ganze Breite des Solarkollektors (1) einnehmenden Spaltes von geringer Höhe aufweist und flächig durchströmt wird.

16. Solarthermische Anlage nach einem der Ansprüche 1 bis 14,
**dadurch gekennzeichnet, dass** der Solarkollektor (1) eine Vielzahl parallel durchströmter, Solarfluid-führender Kanäle aufweist, die durch dünnwandige Stege voneinander getrennt sind.

17. Verfahren zum Betreiben einer solarthermischen Anlage mit einem Solarfluid, das in einem Kreislauf über mindestens einen Solarkollektor (1), einen Speicherbehälter (2), Vorlauf- und Rücklaufleitungen (3, 4) zur fluidischen Verbindung von Solarkollektor (1) und Speicherbehälter (2) mit Hilfe einer Umwälzpumpe (5) umgewälzt wird,
**dadurch gekennzeichnet, dass** einfallende Sonnenstrahlung (14) durch eine sonnenzugewandte transparente Wandung eines Solarfluid-führenden Kollektorkanals hindurchtritt und in Abhängigkeit von der physikalischen Beschaffenheit des Solarfluids mehr oder weniger vom Solarfluid absorbiert wird, wobei das Solarfluid aus zwei reversibel miteinander vermischbaren Solarfluidkomponenten besteht und die Absorption der Sonnenstrahlung auf dem hohen Absorptionsvermögen einer Solarfluidkomponente basiert.

18. Verfahren zum Betreiben einer solarthermischen Anlage nach Anspruch 17,
**dadurch gekennzeichnet, dass** die zwei Solarfluidkomponenten mit Anteilen zwischen 0 % und 100 % an der Gesamtfördermenge aus ihren jeweiligen Sammelbereichen (8, 9) des Speicherbehälters (2) mit Hilfe der Umwälzpumpe (5) gefördert werden, aus dem Speicherbehälter (2) ausströmen und zu einem Solarfluid vermischt werden, und dass das Solarfluid durch die Rücklaufleitung (4) zum Solarkollektor (1) fließt, sich im Solarkollektor (1) durch Absorption von Sonnenstrahlung (14) erwärmt, durch die Vorlaufleitung (3) zurück zum Speicherbehälter (2) gefördert wird, in den Speicherbehälter (2) einströmt, hier seine Wärme auf einen Wärmetauscher (16) überträgt und sich in seine Solarfluidkomponenten trennt, die sich daraufhin in unterschiedlichen Höhenbereichen (8, 9) sammeln.

19. Verfahren zum Betreiben einer solarthermischen Anlage nach Anspruch 17 oder 18,
**dadurch gekennzeichnet, dass** die Anteile der Solarfluidkomponenten an dem zum Solarkollektor (1) geförderten Solarfluid über eine Mischeinstellung einer aktiven oder passiven, innerhalb oder außerhalb des Speicherbehälters (2) angeordneten Mischeinrichtung (12, 17) einstellt werden.

20. Verfahren zum Betreiben einer solarthermischen Anlage nach einem der Ansprüche 17 bis 19,
**dadurch gekennzeichnet, dass** das in den Speicherbehälter (2) einströmende Solarfluid sich in seiner Strömungsgeschwindigkeit verzögert und unter Einwirkung der Schwerkraft in seine Solarfluidkomponenten trennt, und dass die Solarfluidkomponenten sich je nach Dichte im oberen oder im unteren Sammelbereich (8, 9) des Speicherbehälters (2) sammeln.

21. Verfahren zum Betreiben einer solarthermischen Anlage nach einem der Ansprüche 19 bis 20, **dadurch gekennzeichnet, dass**
• bei Normalbetrieb mit gewünschter Sonnenstrahlungsabsorption im Solarkollektor (1) und gewünschter Erwärmung des Solarfluides im Speicherbehälter (2) die Umwälzpumpe (5) bei entsprechender Einstellung der Mischeinrichtung (12, 17) wahlweise die Solarfluidkomponente mit hohem Absorptionsvermögen aus ihrem Sammelbereich im Speicherbehälter oder ein Gemisch beider Komponenten aus ihren jeweiligen Sammelbereichen (8, 9) ansaugt und in den Solarkollektor (1) fördert, und dass
• oberhalb eines vorgebbaren Temperaturgrenzwertes für eine unzulässige Erwärmung des Solarfluides im Solarkollektor (1) und/oder im Speicherbehälter (2) die Umwälzpumpe (5) bei entsprechender Einstellung der Mischeinrichtung (12, 17) wahlweise eine Solarfluidkomponente, die geringes Absorptionsvermögen oder hohes Reflexionsvermögen aufweist, aus ihrem Sammelbereich im Speicherbehälter, oder ein Gemisch dieser Komponente mit der hoch absorbierenden Komponente aus ihren jeweiligen Sammelbereichen (8, 9) ansaugt und in den Solarkollektor (1) fördert.

22. Verfahren zum Betreiben einer solarthermischen Anlage nach einem der Ansprüche 19 bis 21,
**dadurch gekennzeichnet, dass** oberhalb eines vorgebbaren Temperaturgrenzwertes für eine unzulässige Erwärmung des Solarfluides im Solarkollektor (1) und/oder im Speicherbehälter (2) sowie bei Ausfall der Umwälzpumpe (5) das im Solarkollektor (1) stehende Solarfluid sich wegen seiner niedrigen Strömungsgeschwindigkeit und unter Schwerkrafteinwirkung in seine beiden Komponenten trennt, und dass die Solarfluidkomponente mit hohem Absorptionsvermögen selbsttätig aus dem Solarkollektor (1) ausströmt und sich im Speicherbehälter (2) und/oder in einem Reservoir (19) sammelt.

23. Verfahren zum Betreiben einer solarthermischen Anlage nach einem der Ansprüche 19 bis 22,
**dadurch gekennzeichnet, dass** oberhalb eines vorgebbaren Temperaturgrenzwertes für eine unzulässige Erwärmung des Solarfluides im Solarkollektor (1) und/oder im Speicherbehälter (2) sowie bei Ausfall der Umwälzpumpe (5) die im Speicherbehälter (2) befindliche Solarfluidkomponente mit hohem Reflexionsvermögen durch die Rücklaufleitung (4) in den Solarkollektor (1) aufsteigt, wobei die Solarfluidkomponente mit hohem Absorptionsvermögen aus dem Solarkollektor (1) verdrängt wird und sich im Speicherbehälter (2) und/oder in einem Reservoir (19) sammelt.
